(19) Europäisches Patentamt
European Patent Office
Office européen des brevets

(11) EP 4 253 453 A1

(12) EUROPEAN PATENT APPLICATION

(43) Date of publication:
**04.10.2023 Bulletin 2023/40**

(21) Application number: **22166275.2**

(22) Date of filing: **01.04.2022**

(51) International Patent Classification (IPC):
***C08J 5/18*** *(2006.01)* ***C08L 23/14*** *(2006.01)*

(52) Cooperative Patent Classification (CPC):
(C-Sets available)
**C08J 5/18; C08F 210/06; C08L 23/14; C08L 23/16;**
C08J 2323/14; C08J 2471/02 (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Borealis AG**
**1020 Vienna (AT)**

(72) Inventors:
- **Wang, Jingbo**
  **4021 Linz (AT)**
- **Gahleitner, Markus**
  **4021 Linz (AT)**
- **Bernreitner, Klaus**
  **4021 Linz (AT)**
- **Niedersuess, Peter**
  **4021 Linz (AT)**
- **Ortner, Stefan**
  **4021 Linz (AT)**

(74) Representative: **Maiwald GmbH**
**Elisenhof**
**Elisenstraße 3**
**80335 München (DE)**

# (54) BLOWN FILM

(57) Blown film of a polypropylene composition comprising an ethylene-propylene copolymer and polyethylene glycol.



Processed by Luminess, 75001 PARIS (FR)

(Cont. next page)

(52) Cooperative Patent Classification (CPC): (Cont.)

C-Sets
**C08F 210/06, C08F 210/02;**
**C08L 23/14, C08L 71/02;**
**C08L 23/14, C08L 71/02, C08K 5/0083**

## Description

The present invention is directed to a blown film consisting of a polypropylene composition comprising an ethylene-propylene copolymer and a polyethylene glycol as well as to the use of said composition for the manufacture of a blown film.

Blown film extrusion is a technology that is the most common method to make plastic films, especially for the packaging industry. The process involves extruding a tube of molten polymer, typically of polyethylene or polypropylene, through a die and inflating the same to several times its initial diameter to form a thin film bubble, which solidifies by cooling and crystallization. This bubble is then collapsed and used as a lay-flat film or can be made into bags. In principle two major processes are known, which basically differ in the kind of cooling of the film bubble. The more common process uses air cooling, and the more complex one water cooling.

One difficulty which occurs in the blown film process is the melt fracture reducing the performance and limit the application. To overcome this problem typically processing aids based on fluoropolymers (e.g. Dynamar from 3M) are used. For long time being, this type of solution worked perfectly and cost efficiently. However, recently it was recognized that such processing aids cause healthy, safety and environmental problems in the production of blown films, due to the fluorine compounds, which accumulate in the produced films. Moreover, such processing aids have long lasting effects in extruders and risks the following production with cross contamination.

Hence, there is the desire to find other processing aids which can replace the fluoropolymers used in the production of blown films based on polypropylene. Especially processing aids are desired which can be used for the production of blown films based on polypropylenes obtained by the use of metallocene catalyst.

The finding of the present invention is to provide a polypropylene composition comprising at least 98.0 wt.-%, based on the total polypropylene composition, of an ethylene-propylene copolymer having 2,1 erythro regio-defects, measured by $^{13}C$ NMR, in the range of >0.10 to 1.00 mol-% and 0.01 to 1.0 wt.-%, based on the total weight of the polypropylene composition, of a polyethylene glycol having a number average molar mass (Mn) in the range of 5,000 to 45,000 g/mol.

Accordingly, the present invention is directed to a blown film consisting of a polypropylene composition comprising

(a) at least 98.0 wt.-%, based on the total weight of the polypropylene composition, of an ethylene-propylene copolymer,
(b) 0.01 to 1.0 wt.-%, based on the total weight of the polypropylene composition, of a polymer processing aid, said polymer processing aid is a polyethylene glycol having a number average molar mass (Mn) in the range of 5,000 to 45,000 g/mol,

wherein further said ethylene-propylene copolymer has

(i) 2,1 erythro regio-defects, measured by $^{13}C$ NMR, in the range of >0.10 to 1.00 mol-%, and
(ii) an ethylene content, measured by $^{13}C$-NMR, in the range of 0.8 to 10.0 mol-%, wherein still further the polypropylene composition has
(iii) a melt flow rate $MFR_2$ (230 °C; 2.16 kg), measured according to ISO 1133, in the range of 0.5 to 5.0 g/10min.

Preferred embodiments of the polypropylene composition from which the blown film is produced is defined in the dependent claims to claim 1.

Preferably the blown film is produced by water cooling.

Additionally the invention is directed to the use of the polypropylene composition as defined in claim 1 and its dependent claims for the manufacture of a blown film.

In the following the invention is defined in more detail.

### Blown Film

Blown films are known to the skilled person. As stated above blown films are obtained by extrusion technology in which a tube of the molten polypropylene composition according to this invention is extruded through a die and inflated to several times its initial diameter to form a thin film bubble. This bubble is then collapsed obtaining a film. Said film can be for instance used as a lay-flat film or can be converted into bags. In the present case air cooling of the film bubble is preferred. Regarding the manufacture of blown films from polypropylene reference is made inter alia to the "Polypropylene Handbook" of "Nello Pasquini, 2nd edition (pages 412 to 414).

As mentioned above the invention is also directed to the use of the polypropylene composition according to this invention for the manufacture of blown films using process conditions well known in the art.

## The polypropylene composition

The blown film made from, i.e. consisting of, the polypropylene composition is defined in the following. First the individual components of the polypropylene composition are described and subsequently the polypropylene composition as such.

## The ethylene-propylene copolymer

The by far major part of the polypropylene composition is an ethylene-propylene copolymer, i.e. at least 98.0 wt.-%, more preferably at least 99.0 wt.-%, of the polypropylene composition is the ethylene-propylene copolymer.

The term "ethylene-propylene copolymer" indicates that said copolymer consists only of units derived from ethylene and propylene, wherein the propylene units make up the major part of the ethylene-propylene copolymer. Accordingly, the ethylene content of the ethylene-propylene copolymer is in the range of 0.8 to 10.0 mol-%, preferably in the range of 1.0 to 6.0 mol-%, more preferably in the range of 1.2 to 4.0, yet more preferably in the range of 1.5 to 3.5 mol-%, measured by $^{13}$C-NMR.

Further the ethylene-propylene copolymer according to this invention must be produced with a metallocene catalyst, which is reflected by the presence of 2,1 erythro regio-defects in the polymer chain. Further information regarding the polymerization conditions is provided in detail below. Accordingly, the ethylene-propylene copolymer according to this invention has 2,1 erythro regio-defects, measured by $^{13}$C NMR, in the range of >0.10 to 1.00 mol-%, more preferably in the range of 0.35 to 0.85 mol-%, yet more preferably in the range of 0.45 to 0.75 mol-%.

A further characteristic of the ethylene-propylene copolymer, due to its manufacture with a metallocene catalyst, is its rather low amounts of xylene cold solubles. Thus, it is preferred that the ethylene-propylene copolymer has a xylene cold soluble (XCS) fraction, determined at 25 °C according to ISO 16152, in the range of 0.1 to 5.0 wt.-%, more preferably in the range of 0.2 to 3.0 wt.-%, yet more preferably in the range of 0.3 to 1.0 wt.-%.

The term "ethylene-propylene copolymer" shall further indicated that the copolymer is not a heterophasic system. Accordingly the ethylene-propylene copolymer according to this invention is monophasic as well understood by the skilled person. In other words, the ethylene-propylene copolymer does not comprise polymer components, which are not miscible with each other, as this is the case for heterophasic propylene copolymers. In contrast to monophasic systems, heterophasic systems comprise a continuous polymer phase, like a polypropylene, in which a further non-miscible polymer, like an elastomeric polymer, is dispersed as inclusions. Said polypropylene systems containing a polypropylene matrix and inclusions as a second polymer phase would by contrast be called heterophasic and are not part of the present invention. The presence of second polymer phases or the so-called inclusions is for instance visible by high resolution microscopy, like electron microscopy or atomic force microscopy, or by dynamic mechanical thermal analysis (DMTA). Specifically in DMTA, the presence of a multiphase structure can be identified by the presence of at least two distinct glass transition temperatures.

Further it is preferred that the the ethylene-propylene copolymer has a molar mass distribution (MMD), defined as the ratio between the weight average molar mass (Mw) and the number average molar mass (Mn) and determined by Gel Permeation Chromatography (GPC) in the range of 2.0 to 5.0, more preferably in the range of 2.1 to 4.5, still more preferably in the range of 2.2 to 3.5.

Additionally the molecular weight of the ethylene-propylene copolymer must be high enough that a blown film can be produced from the polypropylene composition in which the ethylene-propylene copolymer is the major component. Hence it is preferred that the ethylene-propylene copolymer has a melt flow rate $MFR_2$ (230 °C; 2.16 kg), measured according to ISO 1133, in the range of 0.1 to 10 g/1Omin, more preferably in the range of 0.5 to 5.0 g/10min, still more preferably in the range of 0.8 to 3.0 g/10 min.

In a preferred embodiment, the ethylene-propylene copolymer comprises two ethylene-propylene copolymer fractions. That is, the ethylene-propylene copolymer comprises, preferably consists of,

(a) a first ethylene-propylene copolymer fraction (F1) having an ethylene content, measured by $^{13}$C-NMR, is in the range of 0.6 to 5.0 mol-%, preferably in the range of 0.7 to 1.5 mol-%, measured by $^{13}$C-NMR, and
(b) a second ethylene-propylene copolymer fraction (F2),

wherein

- the amount of ethylene in the first ethylene-propylene copolymer fraction (F1) and second ethylene-propylene copolymer fraction (F2) is different, with the proviso that the ethylene content in the first ethylene-propylene copolymer fraction (F1) is lower than in the second ethylene-propylene copolymer fraction (F2),
- the weight ratio between the first ethylene-propylene copolymer fraction (F1) and the second ethylene-propylene copolymer fraction (F2) [(F1)/(F2)] is in the range of 70/30 to 50/50, preferably in the range of 65/35 to 55/45, and

- the total amount of the first ethylene-propylene copolymer fraction (F1) and the second ethylene-propylene copolymer fraction (F2) together, based on the ethylene-propylene copolymer, is at least 98 wt.-%, preferably the ethylene-propylene copolymer consists of the first propylene ethylene-copolymer fraction (F1) and the second ethylene-propylene copolymer fraction (F2).

Accordingly it is preferred that the ethylene-propylene copolymer complies with the equation (1), preferably with the equation (1a)

$$\frac{C2\ (PPC)}{(C2\ (F1)\ x\ [(F1)/(PPC)])} > 3.00 \qquad (1)$$

$$5.00 > \frac{C2\ (PPC)}{(C2\ (F1)\ x\ [(F1)/(PPC)])} > 3.00 \qquad (1a)$$

wherein

"C2 (PPC)" is the ethylene content [mol-%], measured by $^{13}C$ NMR, of the ethylene-propylene copolymer;
"C (F1)" is the ethylene content [mol-%], measured by $^{13}C$ NMR, of the first ethylene-propylene copolymer fraction (F1);
"(F1)/(PPC)" is the amount of the first ethylene-propylene copolymer fraction (F1) in the ethylene-propylene copolymer divided by the amount of the ethylene-propylene copolymer.

Accordingly it is further preferred that the ethylene content between the first ethylene-propylene copolymer fraction (F1) and the second ethylene-propylene copolymer fraction (F2) differs in the range of 2.0 to 6.0 mol-%, more preferably in the range of 2.0 to 5.0 mol-%.

Therefore it is preferred that the ethylene content of the second ethylene-propylene copolymer fraction (F2) is in the range of 3.0 to 14.0 mol-%, more preferably in the range of 3.2 to 10.0 mol-%, still more preferably in the range of 3.5 to 6.0 mol-%.

As mentioned above the ethylene-propylene copolymer according to this invention must be produced with a metallocene catalyst.

Preferably, the ethylene-propylene copolymer is produced in a sequential polymerization process using a specific metallocene catalyst. Accordingly, the ethylene-propylene copolymer must be produced with a metallocene catalyst as disclosed in WO 2019/179959, which is incorporated by reference herewith.

The used metallocene catalyst complexes for the manufacture of the ethylene-propylene copolymer is in particular defined by formula (I):

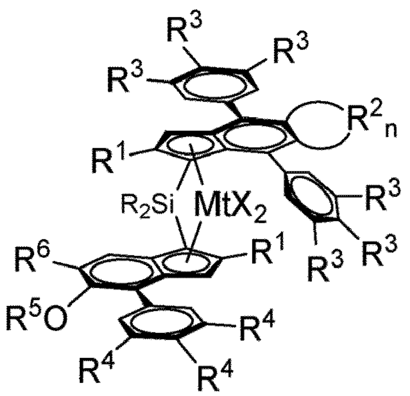

Formula (I)

In a complex of formula (I) it is preferred if Mt is Zr or Hf, preferably Zr; each X is a sigma ligand. Most preferably, each X is independently a hydrogen atom, a halogen atom, $C_1$-$C_6$ alkoxy group or an R' group, where R' is a $C_1$-$C_6$ alkyl, phenyl or benzyl group. Most preferably, X is chlorine, benzyl or a methyl group. Preferably, both X groups are the same. The most preferred options are two chlorides, two methyl or two benzyl groups, especially two chlorides. For further preferred definitions of the residues, reference is made to WO 2019/179959.

Specifically preferred metallocene catalyst complexes are:

rac-anti-dimethylsilanediyl[2-methyl-4,8-bis-(4'-tert-butylphenyl)-1,5,6,7-tetrahydro-s-indacen-1 -yl][2-methyl-4-(3',5'-dimethyl-phenyl)-5-methoxy-6-tert-butylinden-1 -yl] zirconium dichloride (MC-1 );
rac-anti-dimethylsilanediyl[2-methyl-4,8-bis-(3',5'-dimethylphenyl)-1,5,6,7-tetrahydro-s-indacen-1-yl] [2-methyl-4-(3',5'-dimethylphenyl)-5-methoxy-6-tert-butylinden-1 -yl] zirconium dichloride (MC-2);
rac-anti-dimethylsilanediyl[2-methyl-4,8-bis-(3',5'-dimethylphenyl)-1,5,6,7-tetrahydro-s-indacen-1-yl][2-methyl-4-(3',5'-ditert-butyl-phenyl)-5-methoxy-6-tert-butylinden-1-yl] zirconium dichloride (MC-3)

The corresponding zirconium dimethyl analogues of the above defined three catalysts are also possible but less preferred. The most preferred catalyst is the one used for the inventive examples, i.e. MC-2.

Cocatalyst

To form an active catalytic species it is normally necessary to employ a cocatalyst as is well known in the art. Here, a cocatalyst system comprising a boron containing cocatalyst and an aluminoxane cocatalyst is used in combination with the above defined metallocene catalyst complex.
Typical aluminoxane cocatalysts are state of the art. The preferred aluminoxane is methylaluminoxane (MAO). Since the aluminoxanes used according to the invention as cocatalysts are not, owing to their mode of preparation, pure compounds, the molarity of aluminoxane solutions hereinafter is based on their aluminium content.
As mentioned above the aluminoxane cocatalyst is used in combination with a boron containing cocatalyst.
Boron based cocatalysts of interest include those of formula (Z)

$BY_3$ (Z)

wherein Y is the same or different and is a hydrogen atom, an alkyl group of from 1 to about 20 carbon atoms, an aryl group of from 6 to about 15 carbon atoms, alkylaryl, arylalkyl, haloalkyl or haloaryl each having from 1 to 10 carbon atoms in the alkyl radical and from 6-20 carbon atoms in the aryl radical or fluorine, chlorine, bromine or iodine. Preferred examples for Y are methyl, propyl, isopropyl, isobutyl or trifluoromethyl, unsaturated groups such as aryl or haloaryl like phenyl, toluyl, benzyl groups, p-fluorophenyl, 3,5-difluorophenyl, pentachlorophenyl, pentafluorophenyl, 3,4,5-trifluorophenyl and 3,5-di(trifluoromethyl)phenyl. Preferred options are trifluoroborane, triphenylborane, tris(4-fluorophenyl)borane, tris(3,5-difluorophenyl)borane, tris(4-fluoromethylphenyl)borane, tris(2,4,6-trifluorophenyl)borane, tris(penta-fluorophenyl)borane, tris(tolyl)borane, tris(3,5-dimethyl-phenyl)borane, tris(3,5-difluorophenyl)borane and/or tris (3,4,5-trifluorophenyl)borane. Particular preference is given to tris(pentafluorophenyl)borane.
Preferred ionic compounds which can be used include: triethylammoniumtetra(phenyl)borate, tributylammoniumtetra(phenyl)borate, trimethylammoniumtetra(tolyl)borate, tributylammoniumtetra(tolyl)borate, tributylammoniumtetra(pentafluorophenyl)borate, tripropylammoniumtetra(dimethylphenyl)borate, tributylammoniumtetra(trifluoromethylphenyl)borate, tributylammoniumtetra(4-fluorophenyl)borate, N,N-dimethylcyclohexylammoniumtetrakis(pentafluorophenyl)borate, N,N-dimethylbenzylammoniumtetrakis(pentafluorophenyl)borate, N,N-dimethylaniliniumtetra(phenyl)borate, N,N-diethylaniliniumtetra(phenyl)borate, N,N-dimethylaniliniumtetrakis(pentafluorophenyl)borate, N,N-di(propyl)ammoniumtetrakis(pentafluorophenyl)borate, di(cyclohexyl)ammoniumtetrakist(pentafluorophenyl)borate, triphenylphosphoniumtetrakis(phenyl)borate, triethylphosphoniumtetrakis(phenyl)borate, diphenylphosphoniumtetrakis(phenyl)borate, tri(methylphenyl)phosphoniumtetrakis(phenyl)borate, tri(dimethylphenyl)phosphoniumtetrakis(phenyl)borate, triphenylcarbeniumtetrakis(pentafluorophenyl)borate, or ferroceniumtetrakis(pentafluorophenyl)borate.
Preference is given to triphenylcarbeniumtetrakis(pentafluorophenyl) borate, N,N-dimethylcyclohexylammoniumtetrakis(pentafluorophenyl)borate or N,N-dimethylbenzylammoniumtetrakis(pentafluorophenyl)borate. Certain boron cocatalysts are especially preferred. Preferred borates comprise the trityl ion. Thus, the use of N,N-dimethylammoniumtetrakispentafluorophenylborate and $Ph_3CB(PhF_5)_4$ and analogues therefore are especially favoured.
It is especially preferred the combination of a borate cocatalyst, like Trityl tetrakis(pentafluorophenyl) borate, and methylaluminoxane (MAO).
Suitable amounts of cocatalyst will be well known to the skilled man.
The molar ratio of boron to the metal ion of the metallocene may be in the range of 0.5:1 to 10:1 mol/mol, preferably in the range of 1:1 to 10:1, especially in the range of 1:1 to 5:1 mol/mol.
The molar ratio of Al in the aluminoxane to the metal ion of the metallocene may be in the range of 1:1 to 2000:1 mol/mol, preferably in the range of 10:1 to 1000:1, and more preferably in the range of 50:1 to 500:1 mol/mol.

Catalyst Manufacture

The metallocene catalyst complex can be used in combination with a suitable cocatalyst as a catalyst for the polymerization of propylene, e.g. in a solvent such as toluene or an aliphatic hydrocarbon, (i.e. for polymerization in solution), as it is well known in the art. Preferably, polymerization of propylene takes place in the condensed phase or in gas phase.

The catalyst of the invention can be used in supported or unsupported form. The particulate support material used is preferably an organic or inorganic material, such as silica, alumina or zirconia or a mixed oxide such as silica-alumina, in particular silica, alumina or silica-alumina. The use of a silica support is preferred. The skilled man is aware of the procedures required to support a metallocene catalyst.

Especially preferably, the support is a porous material so that the complex may be loaded into the pores of the support, e.g. using a process analogous to those described in WO 94/14856, WO 95/12622 and WO 2006/097497. The particle size is not critical but is preferably in the range of 5 to 200 pm, more preferably in the range of 20 to 80 pm. The use of these supports is routine in the art.

Alternatively, no support is used at all. Such a catalyst can be prepared in solution, for example in an aromatic solvent like toluene, by contacting the metallocene (as a solid or as a solution) with the cocatalyst, for example methylaluminoxane or a borane or a borate salt previously dissolved in an aromatic solvent, or can be prepared by sequentially adding the dissolved catalyst components to the polymerization medium.

Also, no external carrier may be used but the catalyst is still presented in solid particulate form. Thus, no external support material, such as inert organic or inorganic carrier, for example silica as described above is employed.

In order to provide the catalyst in solid form but without using an external carrier, it is preferred if a liquid/liquid emulsion system is used. Full disclosure of the necessary process can be found in WO 03/051934, which is herein incorporated by reference The most preferred catalyst system is defined in the example section below (single site catalyst system 1 (SSCS1)).

The polymerization conditions in the sequential polymerization of the ethylene-propylene copolymer are nothing specific and well known to the skilled person. Typically the first ethylene-propylene copolymer fraction (F1) is produced in a slurry reactor and the second ethylene-propylene copolymer fraction (F2) is produced in a gas phase reactor in the presence of a the first ethylene-propylene copolymer fraction (F1). Regarding such multistage processes a preferred process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479, WO 00/68315, WO2015/082379 or in WO2015/011134.

It is well known that prior to the main polymerization a prepolymerization may take place.

The prepolymerization may be carried out in any type of continuously operating polymerization reactor. The prepolymerization may be carried out in a slurry polymerization or a gas phase polymerization reactor, preferably in a loop prepolymerization reactor.

In a preferred embodiment, the prepolymerization is conducted as bulk slurry polymerization in liquid propylene, i.e. the liquid phase mainly comprises propylene, with minor amount of other reactants and optionally inert components dissolved therein.

The prepolymerization is carried out in a continuously operating reactor at an average residence time of 5 minutes up to 90 min. Preferably the average residence time is within the range of 10 to 60 minutes and more preferably within the range of 15 to 45 minutes.

The prepolymerization reaction is typically conducted at a temperature of 0 to 50 °C, preferably from 10 to 45 °C, and more preferably from 15 to 35 °C.

The pressure in the prepolymerization reactor is not critical but must be sufficiently high to maintain the reaction mixture in liquid phase and is generally selected such that the pressure is higher than or equal to the pressure in the subsequent polymerization. Thus, the pressure may be from 20 to 100 bar, for example 30 to 70 bar.

In case a prepolymerization step is performed, all of the catalyst mixture is introduced to the prepolymerization step.

The precise control of the prepolymerization conditions and reaction parameters is within the skill of the art.

As mentioned above the first ethylene-propylene copolymer fraction (F1) is preferably produced in a slurry phase polymerization step, i.e. in the liquid phase.

The temperature in the slurry polymerization is typically from 50 to 110 °C, preferably from 60 to 100 °C and in particular from 65 to 95 °C. The pressure is from 1 to 150 bar, preferably from 10 to 100 bar.

The slurry polymerization may be conducted in any known reactor used for slurry polymerization. Such reactors include a continuous stirred tank reactor and a loop reactor. Loop reactors are generally known in the art and examples are given, for instance, in US-A-4582816, US-A-3405109, US-A-3324093, EP-A-479186 and US-A-5391654.

The residence time can vary in the reactor zones identified above. In one embodiment, the residence time in the slurry reactor, for example a loop reactor, is in the range of from 0.5 to 5 hours, for example 0.5 to 2 hours, while

the residence time in the gas phase reactor generally will be in the range from 1 to 8 hours, like from 1.5 to 4 hours.

Into the slurry polymerization stage other components may also be introduced as it is known in the art. Thus, hydrogen is added to control the molecular weight of the polymer.

The slurry polymerization stage is followed by the gas phase polymerization stage in which the second ethylene-propylene copolymer fraction (F2) is produced. It is preferred to conduct the slurry directly into the gas phase polymerization zone without a flash step between the stages. This kind of direct feed is described in EP-A-887379, EP-A-887380, EP-A-887381 and EP-A-991684.

That is, the reaction product of the slurry phase polymerization, i.e. the first ethylene-propylene copolymer fraction (F1), which preferably is carried out in a loop reactor, is then transferred to the subsequent gas phase reactor in which the second ethylene-propylene copolymer fraction (F2) is produced.

The polymerization in gas phase may be conducted in fluidized bed reactors, in fast fluidized bed reactors or in settled bed reactors or in any combination of these. When a combination of reactors is used then the polymer is transferred from one polymerization reactor to another. However, it is preferred that the second ethylene-propylene copolymer fraction (F2) is produced in one gas phase reactor.

Typically the gas phase reactor is operated at a temperature within the range of from 50 to 100 °C, preferably from 65 to 95 °C. The pressure is suitably from 10 to 40 bar, preferably from 15 to 30 bar

According to this invention, the first ethylene-propylene copolymer fraction (F1) is produced in the first step, i.e. in a first reactor, e.g. the loop reactor, whereas the second ethylene-propylene copolymer fraction (F2) is produced in the subsequent step, i.e. in the second reactor, e.g. the gas phase reactor. In case the polymerization process of the first ethylene-propylene copolymer fraction (F1) and the second ethylene-propylene copolymer fraction (F2) contains also a prepolymerization step, then the first ethylene-propylene copolymer fraction (F1) according to this invention is the polymer produced in the prepolymerization together with the polymer produced in the subsequent first step, in the first reactor, e.g. the loop reactor, whereas the second ethylene-propylene copolymer fraction (F2) is the product of the second reactor, e.g. the gas phase reactor. The amount of polymer produced in the prepolymerization step is comparatively small compared to the quantities produced in the first reactor and therefore has no great influence on the properties of the ethylene-propylene copolymer from the first reactor.

The preferred properties of the first ethylene-propylene copolymer fraction (F1) and the second ethylene-propylene copolymer fraction (F2) have been mentioned above.

**The polymer processing aid**

Polymer processing aids are used to eliminate or at least to reduce melt fracture, to increase gloss and to reduce surface defects improving surface smoothness. Typically fluoropolymers are the first choice as polymer processing aid. However, in the present invention it has been found out that polyethylene glycol (PEG, CAS-No. 25322-68-3) having a number average molar mass (Mn) in the range of 5,000 to 45,000 g/mol is an excellent alternative to the commonly used fluoropolymers, for the manufacture of blown films based on the ethylene-propylene copolymer according to this invention. Preferably, the polyethylene glycol has a number average molar mass (Mn) in the range of 5,000 to 25,000 g/mol, still more preferably in the range of 5,000 to 15,000 g/mol.

The polyethylene glycol used in the present invention is state of the art and well known to the skilled person. The polyethylene glycol used in the present invention is commercially available.

Thus the polypropylene composition according to this invention must comprise 0.01 to 1.0 wt.-%, more preferably of 0.05 to 0.8 wt.-%, based on the total weight of the polypropylene composition, of a polymer processing aid, said polymer processing aid is a polyethylene glycol having a number average molar mass (Mn) in the range of 5,000 to 45,000 g/mol, more preferably in the range of 5,000 to 25,000 g/mol, still more preferably in the range of 5,000 to 15,000 g/mol.

It is especially preferred that the polypropylene composition according to this invention does not contain a fluoropolymer. Hence it is preferred that no fluorine is detectable in the polypropylene composition according to this invention.

Hence it is preferred that the polypropylene composition according to this invention comprises 0.01 to 1.0 wt.-%, more preferably 0.05 to 0.8 wt.-%, based on the total weight of the polypropylene composition, of a polymer processing aid, said polymer processing aid is a polyethylene glycol having a number average molar mass (Mn) in the range of 5,000 to 45,000 g/mol, more preferably in the range of 5,000 to 25,000 g/mol, still more preferably in the range of 5,000 to 15,000 g/mol and wherein further no fluorine is detectable in the polypropylene composition according to this invention.

It is even more preferred that the polyethylene glycol having a number average molar mass (Mn) in the range of 5,000 to 45,000 g/mol, more preferably in the range of 5,000 to 25,000 g/mol, still more preferably in the range of 5,000 to 15,000 g/mol, is the sole polymer processing aid in the polypropylene composition according to this invention.

In other words, it is in particularly preferred that the polypropylene composition according to this invention must comprise 0.01 to 1.0 wt.-%, more preferably 0.05 to 0.8 wt.-%, based on the total weight of the polypropylene composition,

of a polymer processing aid, said polymer processing aid is a polyethylene glycol having a number average molar mass (Mn) in the range of 5,000 to 45,000 g/mol, more preferably in the range of 5,000 to 25,000 g/mol, still more preferably in the range of 5,000 to 15,000 g/mol, wherein further said polyethylene glycol is the sole polymer processing aid in the polypropylene composition. Consequently, no fluorine in such a polypropylene composition is detectable.

## The alpha-nucleating agent

It is preferred that the polypropylene composition according to this invention is alpha-nucleated. Accordingly it is preferred that the polypropylene composition according to this invention comprises additionally an alpha-nucleating agent which is present in the range of 0.01 to 1.0 wt.-%, more preferably in the range of 0.03 to 0.8 wt.-%, yet more preferably in the range of 0.05 to 0.5 wt.-%, based on the total weight of the composition.

Preferred examples of the alpha-nucleating agents are disclosed in "Plastics Additives Handbook", Hans Zweifel, 6th Edition, p. 967 - 990.

Among all alpha-nucleating agents, bicyclo (2.2.1) heptane-2,3-dicarboxylic acid, di-sodium salt as for instance used in Hyperform familiy of Milliken (e.g. HPN-20E), hydroxy-bis[2,4,8,10-tetrakis(1,1-dimethylethyl)-6-hydroxy-12H-dibenzo-[d,g]-dioxa-phoshocin-6-oxidato] aluminium as used in the nucleating agents ADK NA-21, NA-21 E, NA-21 F, etc., metal salts of 2,2'-methylene bis(4,6-di-tert-butylphenyl)phosphat, like sodium-2,2'-methylene-bis(4,6-di-t-butylphenyl)phosphate (ADK NA-11), aluminium-hydroxy-bis[2,2'-methylene-bis(4,6-di-t-butyl-phenyl)-phosphate], 2,2'- methylene bis-(2,6-di-tert. butylphenyl) phosphate lithium salt (as used in ADK STAB NA-71), sorbitol-based nucleating agents, i.e. di(alkylbenzylidene)sorbitols like 1,3:2,4-25 dibenzylidene sorbitol, 1,3:2,4-di(4-methylbenzylidene) sorbitol, 1,3:2,4-di(4- ethylbenzylidene) sorbitol and 1,3:2,4-Bis(3,4-dimethylbenzylidene) sorbitol, as well as nonitol derivatives, like 1,2,3-trideoxy-4,6;5,7-bis-O-[(4-propylphenyl)methylene] nonitol, and benzene-trisamides like substituted 1,3,5-benzenetrisamides as N,N',N"-tris-tert-butyl-1,3,5- benzenetricarboxamide, N,N',N"-tris-cyclohexyl-1,3,5-benzene-tricarboxamide and N-[3,5-bis-(2,2-dimethyl-propionylamino)-phenyl]-2,2-dimethyl-propionamide, wherein metal salts of 2,2'-methylene bis(4,6-di-tert-butylphenyl)phosphat, like 2,2'- methylene bis-(2,6-di-tert. butylphenyl) phosphate lithium salt (e.g. NA-71), bicyclo (2.2.1) heptane-2,3-dicarboxylic acid, di-sodium salt (e.g. HPN-20E), hydroxy-bis[2,4,8,10-tetrakis(1,1-dimethylethyl)-6-hydroxy-12H-dibenzo-[d,g]-dioxa-phoshocin-6-oxidato] aluminium( e.g. NA-21), and polymeric nucleating agents selected from the group consisting of vinylcycloalkane polymers and vinylalkane polymers are particularly preferred.

Preferably, the polymer composition contains at least one alpha-nucleating agent selected from the group consisting of metal salt of 2,2'-methylene bis(4,6-di-tert-butylphenyl)phosphat, hydroxy-bis[2,4,8,10-tetrakis(1,1-dimethylethyl)-6-hydroxy-12H-dibenzo-[d,g]-dioxa-phoshocin-6-oxidato] aluminium (e.g. NA-21), polymeric nucleating agent and bicyclo (2.2.1) heptane-2,3-dicarboxylic acid, di-sodium salt (HPN-20E). Still more preferably the alpha-nucleating agent(s) is/are selected from the group consisting of 2,2'-methylene bis-(2,6-di-tert. butylphenyl) phosphate lithium salt (e.g. NA-71), bicyclo (2.2.1) heptane-2,3-dicarboxylic acid, di-sodium salt (e.g. HPN-E20) and poly vinylcyclohexane (p-VCH). Yet more preferably, the alpha-nucleating agent(s) present in the polymer composition is/are selected from the group consisting of 2,2'- methylene bis-(2,6-di-tert. butylphenyl) phosphate lithium salt (e.g. NA-71), hydroxy-bis[2,4,8,10-tetrakis(1,1-dimethylethyl)-6-hydroxy-12H-dibenzo-[d,g]-dioxa-phoshocin-6-oxidato] aluminium (like NA-21), bicyclo (2.2.1) heptane-2,3-dicarboxylic acid, di-sodium salt (HPN-20E) and poly vinylcyclohexane (p-VCH).

Thus, it is especially preferred that the alpha-nucleating agent(s) present in the polypropylene composition is/are selected from the group consisting of hydroxy-bis[2,4,8,10-tetrakis(1,1-dimethylethyl)-6-hydroxy-12H-dibenzo-[d,g]-dioxa-phoshocin-6-oxidato] aluminium (e.g. NA-21), poly vinylcyclohexane (p-VCH), 2,2'- methylene bis-(2,6-di-tert. butylphenyl) phosphate lithium salt (e.g. NA-71) and bicyclo (2.2.1) heptane-2,3-dicarboxylic acid, di-sodium salt (HPN-20E), wherein further the total amount of the alpha-nucleating agent(s), based on the total amount of the polypropylene composition, is in the range of 0.05 to 0.5 wt.-%.

## Further components

As stated above the polypropylene composition must comprise the ethylene-propylene copolymer as main component and a polymer processing aid. Additionally the polypropylene composition may comprise an alpha-nucleating agent as mentioned above and typical additives other than the alpha-nucleating agent, like antioxidants, antistatic agents and antifogging agents. Accordingly, the term "additive(s)" according to this invention does not cover alpha-nucleating agents and polymer processing aids. Such additives may be premixed with a carrier material, which is typically a polypropylene. According to this invention such carrier material, e.g. such additional polypropylene, is considered as being part of the additives.

Typically, the total amount of additives, which also includes the amount of carrier material, based on the polypropylene composition, shall not exceed 1.0 wt.-%, preferably is in the range of 0.05 to 1.0 wt.-%.

Accordingly, the polypropylene composition according to this invention comprises, preferably consists of,

(a) at least 98.0 wt.-%, more preferably at least 99.0 wt.-%, based on the total weight of the composition, of the ethylene-propylene copolymer,
(b) 0.01 to 1.0 wt.-%, more preferably 0.05 to 0.8 wt.-%, based on the total weight of the polypropylene composition, of a polymer processing aid, said polymer processing aid is a polyethylene glycol having a number average molar mass (Mn) in the range of 5,000 to 45,000 g/mol, preferably in the range of 5,000 to 25,000 g/mol, more preferably in the range of 5,000 to 15,000 g/mol,
(c) 0.01 to 1.0 wt.-%, more preferably 0.05 to 0.5 wt.-%, based on the total weight of the polypropylene composition, of an alpha-nucleating agent, said alpha-nucleating agent is preferably selected from the group consisting of poly vinylcyclohexane (p-VCH), 2,2'-methylene bis-(2,6-di-tert. butylphenyl) phosphate lithium salt, 1,2,3-trideoxy-4,6;5,7-bis-O-[(4-propylphenyl)methylene] nonitol and bis-(3,4-dimethylbenzylidene)-sorbitol (DMDBS), and
(d) 0.05 to 1.0 wt.-%, based on the total weight of the polypropylene composition, of additives.

**Properties of the polypropylene composition**

The polypropylene composition according to this invention has been tailored to be suited for the manufacture of blown films. Hence, the polypropylene composition according to this invention must have a melt flow rate $MFR_2$ (230 °C; 2.16 kg), measured according to ISO 1133, in the range of 0.1 to 10 g/10min, more preferably in the range of 0.5 to 5.0 g/10min, still more preferably in the range of 0.8 to 3.0 g/10 min.
The polypropylene composition according to this invention can be defined further by its melting behavior.
Accordingly it is preferred that the polypropylene composition according to this invention has at least one melting peak temperature ($T_{p1,m}$) in the range of 125 to 150 °C, more preferably in the range of 130 to 148 °C.
The present polypropylene composition is especially characterized by the presence of at least two melting peak temperatures, whereby one melting peak temperature ($T_{p1,m}$) is in the range of 141 to 150 °C, more preferably in the range of 143 to 150 °C and another melting peak temperature ($T_{p2,m}$) is in the range of 130 to 139 °C, more preferably in the range of 131 to 137 °C.

**Preferred embodiments**

In the following some especially preferred embodiments of the invention are listed.
Accordingly, the present invention is directed to a blown film consisting of a polypropylene composition, said polypropylene composition comprising,

(a) at least 98.0 wt.-%, more preferably at least 99.0 wt.-%, based on the total weight of the composition, of the ethylene-propylene copolymer,
(b) 0.01 to 1.0 wt.-%, more preferably 0.05 to 0.8 wt.-%, based on the total weight of the polypropylene composition, of a polymer processing aid, said polymer processing aid is a polyethylene glycol having a number average molar mass (Mn) in the range of 5,000 to 45,000 g/mol, preferably in the range of 5,000 to 25,000 g/mol, more preferably in the range of 5,000 to 15,000 g/mol, and
(c) 0.01 to 1.0 wt.-%, more preferably 0.05 to 0.5 wt.-%, based on the total weight of the polypropylene composition, of an alpha-nucleating agent, said alpha-nucleating agent is preferably selected from the group consisting of hydroxy-bis[2,4,8,10-tetrakis(1,1-dimethylethyl)-6-hydroxy-12H-dibenzo-[d,g]-dioxa-phoshocin-6-oxidato] aluminium, poly vinylcyclohexane (p-VCH), 2,2'- methylene bis-(2,6-di-tert. butylphenyl) phosphate lithium salt, and bicyclo (2.2.1) heptane-2,3-dicarboxylic acid, di-sodium salt,

wherein further said ethylene-propylene copolymer is monophasic and has

(i) 2,1 erythro regio-defects, measured by $^{13}C$ NMR, in the range of >0.10 to 1.00 mol-%, preferably in the range of 0.35 to 0.85 mol-%, more preferably in the range of 0.45 to 0.75 mol-%, and
(ii) an ethylene content, measured by $^{13}C$-NMR, in the range of 0.8 to 10.0 mol-%, preferably in the range of 1.0 to 6.0, more preferably in the range of 1.2 to 4.0 mol-%, still more preferably in the range of 1.5 to 3.5 mol-%,

wherein still further the polypropylene composition has
(iii) a melt flow rate $MFR_2$ (230 °C; 2.16 kg), measured according to ISO 1133, in the range of 0.5 to 5.0 g/10min, preferably in the range of 0.8 to 3.0 g/10 min
wherein still yet further
(iv) no fluorine is detectable in the polypropylene composition.

The present invention is in particular directed to a blown film consisting of a polypropylene composition, said

polypropylene composition comprising,

(a) at least 98.0 wt.-%, more preferably at least 99.0 wt.-%, based on the total weight of the composition, of the ethylene-propylene copolymer,
(b) 0.01 to 1.0 wt.-%, more preferably 0.05 to 0.8 wt.-%, based on the total weight of the polypropylene composition, of a polymer processing aid, said polymer processing aid is a polyethylene glycol having a number average molar mass (Mn) in the range of 5,000 to 45,000 g/mol, preferably in the range of 5,000 to 25,000 g/mol, more preferably in the range of 5,000 to 15,000 g/mol, and
(c) 0.01 to 1.0 wt.-%, more preferably 0.05 to 0.5 wt.-%, based on the total weight of the polypropylene composition, of an alpha-nucleating agent, said alpha-nucleating agent is preferably selected from the group consisting of hydroxy-bis[2,4,8,10-tetrakis(1,1-dimethylethyl)-6-hydroxy-12H-dibenzo-[d,g]-dioxa-phoshocin-6-oxidato] aluminium, poly vinylcyclohexane (p-VCH), 2,2'- methylene bis-(2,6-di-tert. butylphenyl) phosphate lithium salt, and bicyclo (2.2.1) heptane-2,3-dicarboxylic acid, di-sodium salt,

wherein further said ethylene-propylene copolymer is monophasic and has

(i) 2,1 erythro regio-defects, measured by $^{13}C$ NMR, in the range of >0.10 to 1.00 mol-%, preferably in the range of 0.35 to 0.85 mol-%, more preferably in the range of 0.45 to 0.75 mol-%, and
(ii) an ethylene content, measured by $^{13}C$-NMR, in the range of 0.8 to 10.0 mol-%, preferably in the range of 1.0 to 6.0, more preferably in the range of 1.2 to 4.0 mol-%, still more preferably in the range of 1.5 to 3.5 mol-%,

wherein further said ethylene-propylene copolymer comprises, preferably consists of,

(iii) a first ethylene-propylene copolymer fraction (F1) having an ethylene content, measured by $^{13}C$-NMR, in the range of 0.6 to 2.0 mol-%, preferably in the range of 0.7 to 1.5 mol-%, and
(iv) a second ethylene-propylene copolymer fraction (F2),

wherein

- the amount of ethylene in the first ethylene-propylene copolymer fraction (F1) and second ethylene-propylene copolymer fraction (F2) is different, with the proviso that the ethylene content in the first ethylene-propylene copolymer fraction (F1) is lower than in the second ethylene-propylene copolymer fraction (F2),
- the weight ratio between the first ethylene-propylene copolymer fraction (F1) and the second ethylene-propylene copolymer fraction (F2) [(F1)/(F2)] is in the range of 70/30 to 50/50,preferably in the range of 65/35 to 55/45, and

the total amount of the first ethylene-propylene copolymer fraction (F1) and the second ethylene-propylene copolymer fraction (F2) together, based on the ethylene-propylene copolymer, is at least 98 wt.-%, preferably the ethylene-propylene copolymer consists of the first propylene ethylene-copolymer fraction (F1) and the second ethylene-propylene copolymer fraction (F2),
wherein still further the polypropylene composition has

(v) a melt flow rate $MFR_2$ (230 °C; 2.16 kg), measured according to ISO 1133, in the range of 0.5 to 5.0 g/10min, preferably in the range of 0.8 to 3.0 g/10 min,
(vi) at least one melting peak temperature ($T_{p1,m}$) in the range of 125 to 150 °C, more preferably at least one melting peak temperature ($T_{p1,m}$) in the range of 130 to 148 °C, still more preferably at least two melting peak temperatures, whereby one melting peak temperature ($T_{p1,m}$) is in the range of 141 to 150 °C, more preferably in the range of 143 to 150 °C and another melting peak temperature ($T_{p2,m}$) is in the range of 130 to 139 °C, more preferably in the range of 131 to 137 °C,

wherein still yet further
(vii) no fluorine is detectable in the polypropylene composition.

Even more preferred the present invention is directed to a blown film consisting of a polypropylene composition, said polypropylene composition consisting of

(a) at least 98.0 wt.-%, more preferably at least 99.0 wt.-%, based on the total weight of the composition, of the ethylene-propylene copolymer,
(b) 0.01 to 1.0 wt.-%, more preferably 0.05 to 0.8 wt.-%, based on the total weight of the polypropylene composition,

of a polymer processing aid, said polymer processing aid is a polyethylene glycol having a number average molar mass (Mn) in the range of 5,000 to 45,000 g/mol, preferably in the range of 5,000 to 25,000 g/mol, more preferably in the range of 5,000 to 15,000 g/mol,
(c) 0.01 to 1.0 wt.-%, more preferably 0.05 to 0.5 wt.-%, based on the total weight of the polypropylene composition, of an alpha-nucleating agent, said alpha-nucleating agent is preferably selected from the group consisting of hydroxy-bis[2,4,8,10-tetrakis(1,1-dimethylethyl)-6-hydroxy-12H-dibenzo-[d,g]-dioxa-phoshocin-6-oxidato] aluminium, poly vinylcyclohexane (p-VCH), 2,2'- methylene bis-(2,6-di-tert. butylphenyl) phosphate lithium salt, and bicyclo (2.2.1) heptane-2,3-dicarboxylic acid, di-sodium salt, and
(d) 0.05 to 1.0 wt.-%, based on the total weight of the polypropylene composition, of additives, wherein the additives are not a polymer processing aid and an alpha-nucleating agent,

wherein further said ethylene-propylene copolymer is monophasic and has

(i) 2,1 erythro regio-defects, measured by $^{13}C$ NMR, in the range of >0.10 to 1.00 mol-%, preferably in the range of 0.35 to 0.85 mol-%, more preferably in the range of 0.45 to 0.75 mol-%, and
(ii) an ethylene content, measured by $^{13}C$-NMR, in the range of 0.8 to 10.0 mol-%, preferably in the range of 1.0 to 6.0, more preferably in the range of 1.2 to 4.0 mol-%, still more preferably in the range of 1.5 to 3.5 mol-%,

wherein still further the polypropylene composition has
(iii) a melt flow rate $MFR_2$ (230 °C; 2.16 kg), measured according to ISO 1133, in the range of 0.5 to 5.0 g/10min, preferably in the range of 0.8 to 3.0 g/10 min
wherein still yet further
(iv) the polyethylene glycol is the sole polymer processing aid in the polypropylene composition.

Accordingly the present invention is especially directed to a blown film consisting of a polypropylene composition, said polypropylene composition consisting of

(a) at least 98.0 wt.-%, more preferably at least 99.0 wt.-%, based on the total weight of the composition, of the ethylene-propylene copolymer,
(b) 0.01 to 1.0 wt.-%, more preferably 0.05 to 0.8 wt.-%, based on the total weight of the polypropylene composition, of a polymer processing aid, said polymer processing aid is a polyethylene glycol having a number average molar mass (Mn) in the range of 5,000 to 45,000 g/mol, preferably in the range of 5,000 to 25,000 g/mol, more preferably in the range of 5,000 to 15,000 g/mol,
(c) 0.01 to 1.0 wt.-%, more preferably 0.05 to 0.5 wt.-%, based on the total weight of the polypropylene composition, of an alpha-nucleating agent, said alpha-nucleating agent is preferably selected from the group consisting of hydroxy-bis[2,4,8,10-tetrakis(1,1-dimethylethyl)-6-hydroxy-12H-dibenzo-[d,g]-dioxa-phoshocin-6-oxidato] aluminium, poly vinylcyclohexane (p-VCH), 2,2'- methylene bis-(2,6-di-tert. butylphenyl) phosphate lithium salt, and bicyclo (2.2.1) heptane-2,3-dicarboxylic acid, di-sodium salt, and
(d) 0.05 to 1.0 wt.-%, based on the total weight of the polypropylene composition, of additives, wherein the additives are not a polymer processing aid and an alpha-nucleating agent,

wherein further said ethylene-propylene copolymer is monophasic and has

(i) 2,1 erythro regio-defects, measured by $^{13}C$ NMR, in the range of >0.10 to 1.00 mol-%, preferably in the range of 0.35 to 0.85 mol-%, more preferably in the range of 0.45 to 0.75 mol-%, and
(ii) an ethylene content, measured by $^{13}C$-NMR, in the range of 0.8 to 10.0 mol-%, preferably in the range of 1.0 to 6.0, more preferably in the range of 1.2 to 4.0 mol-%, still more preferably in the range of 1.5 to 3.5 mol-%,

wherein further said ethylene-propylene copolymer comprises, preferably consists of,

(iii) a first ethylene-propylene copolymer fraction (F1) having an ethylene content, measured by $^{13}C$-NMR, in the range of 0.6 to 2.0 mol-%, preferably in the range of 0.7 to 1.5 mol-%, and
(iv) a second ethylene-propylene copolymer fraction (F2),

wherein

- the amount of ethylene in the first ethylene-propylene copolymer fraction (F1) and second ethylene-propylene copolymer fraction (F2) is different, with the proviso that the ethylene content in the first ethylene-propylene

copolymer fraction (F1) is lower than in the second ethylene-propylene copolymer fraction (F2),

- the weight ratio between the first ethylene-propylene copolymer fraction (F1) and the second ethylene-propylene copolymer fraction (F2) [(F1)/(F2)] is in the range of 70/30 to 50/50,preferably in the range of 65/35 to 55/45, and

the total amount of the first ethylene-propylene copolymer fraction (F1) and the second ethylene-propylene copolymer fraction (F2) together, based on the ethylene-propylene copolymer, is at least 98 wt.-%, preferably the ethylene-propylene copolymer consists of the first propylene ethylene-copolymer fraction (F1) and the second ethylene-propylene copolymer fraction (F2),
wherein still further the polypropylene composition has

(v) a melt flow rate $MFR_2$ (230 °C; 2.16 kg), measured according to ISO 1133, in the range of 0.5 to 5.0 g/10min, preferably in the range of 0.8 to 3.0 g/10 min,
(vi) at least one melting peak temperature ($T_{p1,m}$) in the range of 125 to 150 °C, more preferably at least one melting peak temperature ($T_{p1,m}$) in the range of 130 to 148 °C, still more preferably at least two melting peak temperatures, whereby one melting peak temperature ($T_{p1,m}$) is in the range of 141 to 150 °C, more preferably in the range of 143 to 150 °C and another melting peak temperature ($T_{p2,m}$) is in the range of 130 to 139 °C, more preferably in the range of 131 to 137 °C,

wherein still yet further
(vii) the polyethylene glycol is the sole polymer processing aid in the polypropylene composition.

In the following the invention is described by way of examples.

**A. Measuring methods**

The following definitions of terms and determination methods apply for the above general description of the invention including the claims as well as to the below examples unless otherwise defined.

**Quantification of microstructure by NMR spectroscopy**

Quantitative nuclear-magnetic resonance (NMR) spectroscopy was used to quantify the isotacticity and regio-regularity of the ethylene-propylene copolymer.

Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics.

Approximately 200 mg of material was dissolved in *1,2*-tetrachloroethane-$d_2$ (TCE-$d_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}C\{^1H\}$ NMR spectra were processed, integrated and relevant quantitative properties determined from the integrals using proprietary computer programs.

All chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromolecules 30 (1997) 6251).

Specifically the influence of regio-defects and comonomer on the quantification of the tacticity distribution was corrected for by subtraction of representative regio-defect and comonomer integrals from the specific integral regions of the stereo sequences.

The isotacticity was determined at the pentad level and reported as the percentage of isotactic pentad (mmmm) sequences with respect to all pentad sequences:

$$[mmmm]\ \% = 100 * (mmmm / \text{sum of all pentads})$$

The presence of 2,1 erythro regio-defects was indicated by the presence of the two methyl sites at 17.7 and 17.2 ppm and confirmed by other characteristic sites. Characteristic signals corresponding to other types of regio-defects were not observed (Resconi, L., Cavallo, L., Fait, A., Piemontesi, F., Chem. Rev. 2000, 100, 1253).

The amount of 2,1 erythro regio-defects was quantified using the average integral of the two characteristic methyl sites at 17.7 and 17.2 ppm:

$$P_{21e} = (I_{e6} + I_{e8}) / 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio-defects:

$$P_{total} = P_{12} + P_{21e}$$

The mole percent of 2,1 erythro regio-defects was quantified with respect to all propene:

$$[21e]\ \text{mol-\%} = 100 * (P_{21e} / P_{total})$$

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S_{\beta\beta} + S_{\beta\gamma} + S_{\beta\delta} + 0.5(S_{\alpha\beta} + S_{\alpha\gamma}))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [\text{mol-\%}] = 100 * f_E$$

The weight percent comonomer incorporation was calculated from the mole fraction:

$$E\ [\text{wt.-\%}] = 100 * (f_E * 28.06) / ((f_E * 28.06) + ((1-f_E) * 42.08))$$

**Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of the polypropylene is determined at a temperature of 230 °C and a load of 2.16 kg.

**Calculation** of melt flow rate $MFR_2$ (230 °C) of the second polypropylene (PP2):

$$MFR(PP2) = 10^{\left[\frac{\log(MFR(PP)) - w(PP1)\,x\,\log(MFR(PP\ \ ))}{w(PP2)}\right]}$$

wherein

w(PP1) is the weight fraction [in wt.-%] of the first ethylene-propylene copolymer fraction (F1) ,
w(PP2) is the weight fraction [in wt.-%] of the second ethylene-propylene copolymer fraction (F2) ,
MFR(PP1) is the melt flow rate $MFR_2$ (230 °C) [in g/10min] the first ethylene-propylene copolymer fraction (F1),
MFR(PP) is the melt flow rate $MFR_2$ (230 °C) [in g/10min] of the reactor powder of the ethylene-propylene copolymer,
MFR(PP2) is the calculated melt flow rate $MFR_2$ (230 °C) [in g/10min] of the second ethylene-propylene copolymer fraction (F2).

**Molar mass (ethylene-propylene copolymer)**

Molar mass averages (Mz, Mw and Mn) and molar mass distribution (MMD), i.e. Mw/Mn, were determined by Gel Permeation Chromatography (GPC) according to ISO 16014-4:2003 and ASTM D 6474-99 using the following formulas:

$$M_n = \frac{\sum_{i=1}^{N} A_i}{\sum(A_i/M_i)}$$

$$M_w = \frac{\sum_{i=1}^{N}(A_i\ x\ M_i)}{\sum A_i}$$

$$M_z = \frac{\sum_{i=1}^{N}(A_i\ x\ M_i^2)}{\sum(A_i/M_i)}$$

where Ai and Mi are the chromatographic peak slice area and polyolefin molecular weight (MW).

A PolymerChar GPC instrument, equipped with infrared (IR) detector was used with 3 x Olexis and 1x Olexis Guard columns from Polymer Laboratories and 1,2,4-trichlorobenzene (TCB, stabilized with 250 mg/l 2,6-Di-tert-butyl-4-methyl-phenol) as solvent at 160 °C and at a constant flow rate of 1 ml/min. 200 μL of sample solution were injected per analysis. The column set was calibrated using universal calibration (according to ISO 16014-2:2003) with at least 15 narrow MWD polystyrene (PS) standards in the range of 0.5 kg/mol to 11500 kg/mol. Mark Houwink constants used for PS, PE and PP are as described per ASTM D 6474-99. All samples were prepared by dissolving 5.0 to 9.0 mg of polymer in 8 ml (at 160 °C) of stabilized TCB (same as mobile phase) for 2.5 hours for PP or 3 hours for PE at 160 °C under continuous gentle shaking in the autosampler of the GPC instrument.

**Molar mass (PEG):**

The molar mass averages (Mz, Mw and Mn) and the molar mass distribution of polyethylene glycol (PEG) is determined by gel permeation chromatography (GPC) in distilled water at 23°C.

**The xylene soluble fraction at room temperature (XCS, wt.-%):**

The amount of the polymer soluble in xylene was determined at 25 °C according to ISO 16152; 5th edition; 2005-07-01.

**DSC analysis, melting peak temperature ($T_{p,m}$) and melting enthalpy ($H_m$), crystallization peak temperature ($T_{p,c}$) and crystallization enthalpy ($H_c$): measured with a TA Instrument** Q200 differential scanning calorimetry (DSC) on 5 to 7 mg samples. DSC was run according to ISO 11357 / part 3 /method C2 in a heat / cool / heat cycle with a scan rate of 10 °C/min in the temperature range of -30 to +225°C. Crystallization peak temperature ($T_{p,c}$) and crystallization enthalpy ($H_c$) were determined from the cooling step, while the melting peak temperature ($T_{p1,m}$) and the melting peak temperature ($T_{p2,m}$) and the melting enthalpy ($H_{m1/2}$) were determined from the second heating step.

**Surface tension**

Surface tension is determined using test inks from Arcotest (22-48 mN/m [2 mN/m steps]). The certified ink (starting with 22 mN/m) is applied to the film in MD and TD. It is visually assessed whether the ink remains on the film for at least 3 seconds. If the ink remains on the film, the next higher ink is tested. This is done until the ink do not longer adhere to the film. The value is given with the highest measured test ink that adheres to the film for at least 3s. The measured surface tension results from a visual assessment with different test inks (in ascending order) and serves as a meaningful assessment of the surface tension.

**Haze**

Haze was determined according to ASTM D 1003-00 on the film as described below.

**Dart drop strength (DDI): Impact resistance by free-falling dart method**

The DDI was measured according to ISO 7765-1:1988 / Method A from the films as produced indicated below. This test method covers the determination of the energy that causes films to fail under specified conditions of impact of a free-falling dart from a specified height that would result in failure of 50 % of the specimens tested (Staircase method A). A uniform missile mass increment is employed during the test and the missile weight is decreased or increased by the uniform increment after test of each specimen, depending upon the result (failure or no failure) observed for the specimen.

Standard conditions:

Conditioning time: > 96 h
Test temperature: 23 °C
Dart head material: phenolic
Dart diameter: 38 mm
Drop height: 660 mm

Results:

Impact failure weight - 50% [g].

**Tensile modulus (TM)**

Tensile modulus (MPa) was measured in machine (MD) and transverse direction (TD) according to ISO 527-3 on film samples prepared as described below at a cross head speed of 1 mm/min.

**B. Preparation of polymer composition**

Catalyst for the inventive examples

***Catalyst complex***

The following metallocene complex has been used as described in WO 2019/179959:

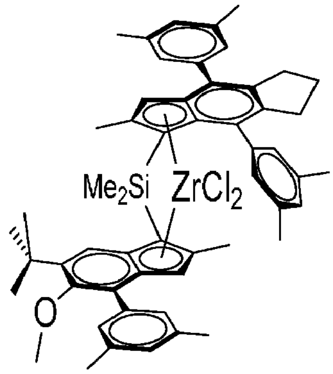

Preparation of MAO-silica support

A steel reactor equipped with a mechanical stirrer and a filter net was flushed with nitrogen and the reactor temperature was set to 20°C. Next silica grade DM-L-303 from AGC Si-Tech Co, pre-calcined at 600°C (5.0 kg) was added from a feeding drum followed by careful pressuring and depressurising with nitrogen using manual valves. Then toluene (22 kg) was added. The mixture was stirred for 15 min. Next 30 wt.% solution of MAO in toluene (9.0 kg) from Lanxess was added via feed line on the top of the reactor within 70 min. The reaction mixture was then heated up to 90°C and stirred at 90°C for additional two hours. The slurry was allowed to settle and the mother liquor was filtered off. The catalyst was washed twice with toluene (22 kg) at 90°C, following by settling and filtration. The reactor was cooled off to 60°C and the solid was washed with heptane (22.2 kg). Finally MAO treated $SiO_2$ was dried at 60°C under nitrogen flow for 2 hours and then for 5 hours under vacuum (-0.5 barg) with stirring. MAO treated support was collected as a free-flowing white powder found to contain 12.2% Al by weight.

***Single site catalyst system 1 (SSCS1) preparation***

30 wt.% MAO in toluene (0.7 kg) was added into a steel nitrogen blanked reactor via a burette at 20 °C. Toluene (5.4 kg) was then added under stirring. The metallocene complex as described above (93 g) was added from a metal cylinder followed by flushing with 1 kg toluene. The mixture was stirred for 60 minutes at 20°C. Trityl tetrakis(pentafluorophenyl) borate (91 g) was then added from a metal cylinder followed by a flush with 1 kg of toluene. The mixture was stirred for 1 h at room temperature. The resulting solution was added to a stirred cake of MAO-silica support prepared as described above over 1 hour. The cake was allowed to stay for 12 hours, followed by drying under $N_2$ flow at 60°C for 2 h and additionally for 5 h under vacuum (-0.5 barg) under stirring stirring.

Dried catalyst was sampled in the form of pink free flowing powder containing 13.9% Al and 0.11% Zr.

**Table 1: Polymerization conditions**

| **Polymer** | | Poly1 |
|---|---|---|
| Catalyst | | SSCS1 |
| **Prepoly reactor** | | |
| Temp. | [°C] | 18 |
| Press. | [kPa] | 4994 |
| Residence time | [h] | 0.4 |
| **Loop reactor** | | |
| Temp. | [°C] | 68 |
| Press. | [kPa] | 4985 |
| Feed H2/C3 ratio | [mol/kmol] | 0.1 |
| Feed C2/C3 ratio | [mol/kmol] | 15.3 |
| Polymer Split* | [wt.-%] | 60 |
| $MFR_2$* | [g/10 min] | 3.9 |

(continued)

| **Polymer** | | Poly1 |
|---|---|---|
| Total C2* | [wt.-%] | 0.66 |
| Total C2* | [mol-%] | 0.99 |
| XCS* | [wt.-%] | 0.51 |
| **GPR (F2)** | | |
| Temp. | [°C] | 83 |
| Press. | [kPa] | 2500 |
| H2/C3 ratio | [mol/kmol] | 0.7 |
| C2/C3 ratio | [mol/kmol] | 95.8 |
| Polymer Split | [wt.-%] | 40 |
| C2** | [wt.-%] | 3.01 |
| C2** | [mol-%] | 4.45 |
| $MFR_2$*** | [g/10 min] | 0.65 |
| **Pellet** | | |
| $MFR_2$ | [g/10 min] | 1.9 |
| MWD | [-] | 2.9 |
| Total C2 | [wt.-%] | 1.6 |
| Total C2 | [mol-%] | 2.4 |
| 2,1 erythro | [mol-%] | 0.61 |
| XCS | [wt.-%] | 0.49 |
| * "$MFR_2$", "Total C2", "XCS" and "Polymer Split" are measured in the loop reactor, i.e. is the combination of Prepoly Reactor and Loop reactor and considered as the first propylene copolymer fraction (F1)<br>** "C2" is calculated from the "Total C2" measured in the loop reactor and "Total C2" measured from the pellet<br>*** "$MFR_2$" is calculated from the $MFR_2$ measured in the loop reactor and the $MFR_2$ of the pellet using the formula given above defining the measurement of $MFR_2$ | | |

**Table 2: Polymer composition and blown film properties**

| | | CE1 | IE1 | IE2 |
|---|---|---|---|---|
| Poly1 | [wt.-%] | 99.75 | 99.55 | 99.55 |
| AO1 | [wt.-%] | 0.1 | 0.1 | - |
| SHT | [wt.-%] | 0.05 | 0.05 | - |
| NA | [wt.-%] | 0.1 | 0.1 | 0.1 |
| PEG-8 | [wt.-%] | - | 0.2 | - |
| PEG-35 | [wt.-%] | - | - | 0.2 |
| $MFR_2$ | [g/10min] | 1.9 | 2.5 | 2.4 |
| $T_{p,c}$ | [°C] | 116 | 117 | 116 |
| $T_{p1,m}$ | [°C] | 146 | 146 | 146 |
| $T_{p2,m}$ | [°C] | 134 | 134 | 135 |
| CSR | [$s^{-1}$] | 230 | 576 | 461 |

(continued)

| | | CE1 | IE1 | IE2 |
|---|---|---|---|---|
| Blown film properties | | | | |
| TM(MD) | [MPa] | 1407 | 1548 | 1475 |
| TM(TD) | [MPa] | 1308 | 1398 | 1371 |
| DDI | [g] | 31 | 40 | 36 |
| Haze | [%] | 4 | 5 | 5 |
| Surface tension | [dyn] | 28 | 28 | 30 |
| "CSR" is the critical shear rate<br>"AO1" is a mixture of the sterically hindered phenol pentaerythrityl-tetrakis(3-(3',5'-di-tert. butyl-4-hydroxyphenyl)-propionate (CAS-no. 6683-19-8, commercially available as Irganox 1010 from BASF SE, Germany) and the phosphorous based antioxidant tris (2,4-di-t-butylphenyl) phosphite (CAS-no. 31570-04-4, commercially available as Irgafos 168 from BASF SE, Germany) in the weight ratio of 1:2;<br>"SHT" is the acid scavenger Hycite 713 of BASF SE, Germany, a magnesium/aluminium-hydrotalcite (CAS-no. 11097-59-9)<br>"NA" is the commercial alpha-nucleating agent ADK STAB NA-71 of Adeka Corporation, Japan, a mixture comprising 2,2'-Methylenebis(2,4-di-tert-butylphenyl)phosphate lithium salt (CAS-no. 85209-93-4);<br>"PEG-8" is a polyethylene glycol (CAS-No. 25322-68-3) with a number average molar mass (Mn) in the range of 7,000 to 8,000 g/mol supplied by Clariant, Germany;<br>"PEG-35" is a polyethylene glycol (CAS-No. 25322-68-3) with a number average molar mass (Mn) in the range of 34,000 to 36,000 g/mol supplied by Clariant, Germany; | | | | |

Adding of polyethylene glycol significantly increases the critical shear rate, whereby polyethylene glycol "PEG-8" gives even better results than the polyethylene glycol "PEG-35".

The blown films were produced on a Windmoller & Holscher (W&H) semi-commercial blown film line, with blow-up ratio of 1:2.5 and film thickness of 50 $\mu$m. The melt temperature was fixed at 220°C and the uptake speed was 14m/min. The surface quality of the films were observed by man skilled in the art. Sharkskin as surface defect was clearly visible for the comparative example "CE1", whereas the inventive examples "IE1" and "IE2" gave excellent glossy surface.

The blown film properties were measured and the results are shown in Table 2. As can be seen, the inventive examples "IE1" and "IE2" show improved mechanical properties, which is reflected in higher tensile modulus and DDI compared to the comparative example "CE1". Another advantage is the good surface tension. The inventive examples "IE1" and "IE2" have same to slightly higher surface tension than the comparative example "CE1", which is beneficial for some applications, e.g. surface functionalization.

## Claims

**1.** Blown film consisting of a polypropylene composition comprising

(a) at least 98.0 wt.-%, based on the total weight of the polypropylene composition, of an ethylene-propylene copolymer,
(b) 0.01 to 1.0 wt.-%, based on the total weight of the polypropylene composition, of a polymer processing aid, said polymer processing aid is a polyethylene glycol having a number average molar mass (Mn) in the range of 5,000 to 45,000 g/mol,

wherein further said ethylene-propylene copolymer has

(i) 2,1 erythro regio-defects, measured by $^{13}$C NMR, in the range of >0.10 to 1.00 mol-%, and
(ii) an ethylene content, measured by $^{13}$C-NMR, in the range of 0.8 to 10.0 mol-%, wherein still further the polypropylene composition has
(iii) a melt flow rate $MFR_2$ (230 °C; 2.16 kg), measured according to ISO 1133, in the range of 0.5 to 5.0 g/10min.

2. Blown film according to claim 1, wherein the ethylene-propylene copolymer has a molar mass distribution (MMD) determined by Gel Permeation Chromatography (GPC) in the range of 2.2 to 3.5.

3. Blown film according to claim 1 or 2, wherein the ethylene-propylene copolymer is monophasic.

4. Blown film according to any one of the preceding claims, wherein no fluorine is detectable in the polypropylene composition.

5. Blown film according to any one of the preceding claims, wherein the polyethylene glycol having a number average molar mass (Mn) in the range of 5,000 to 45,000 g/mol is the sole polymer processing aid in the polypropylene composition.

6. Blown film according to any one of the preceding claims, wherein the polyethylene glycol has a number average molar mass (Mn) in the range of 5,000 to 15,000 g/mol.

7. Blown film according to any one of the preceding claims, wherein the polypropylene composition comprises additionally an alpha-nucleating agent in the range of 0.01 to 1.0 wt.-%, based on the total amount of the polypropylene composition.

8. Blown film according to claim 7, wherein the alpha-nucleating agent is selected from the group consisting of hydroxybis[2,4,8,10-tetrakis(1,1-dimethylethyl)-6-hydroxy-12H-dibenzo-[d,g]-dioxa-phoshocin-6-oxidato] aluminium, poly vinylcyclohexane (p-VCH), 2,2'- methylene bis-(2,6-di-tert. butylphenyl) phosphate lithium salt, and bicyclo (2.2.1) heptane-2,3-dicarboxylic acid, di-sodium salt.

9. Blown film according to any one of the preceding claims, wherein the ethylene-propylene copolymer has xylene cold soluble (XCS) fraction, determined at 25 °C according to ISO 16152, in the range of 0.3 to 1.0 wt.-%.

10. Blown film according to any one of the preceding claims, wherein the polypropylene composition has at least one melting peak temperature ($T_{p1,m}$) in the range of 130 to 148 °C, preferably has at least two melting peak temperatures, whereby one melting peak temperature ($T_{p1,m}$) is in the range of 143 to 150 °C and another melting peak temperature ($T_{p2,m}$) is in the range of 131 to 137 °C.

11. Blown film according to any one of the preceding claims, wherein the ethylene-propylene copolymer comprises, preferably consists of,

(a) a first ethylene-propylene copolymer fraction (F1) having an ethylene content, measured by $^{13}$C-NMR, in the range of 0.6 to 2.0 mol-%, and
(b) a second ethylene-propylene copolymer fraction (F2),

wherein

- the amount of ethylene in the first ethylene-propylene copolymer fraction (F1) and second ethylene-propylene copolymer fraction (F2) is different, with the proviso that the ethylene content in the first ethylene-propylene copolymer fraction (F1) is lower than in the second ethylene-propylene copolymer fraction (F2),
- the weight ratio between the first ethylene-propylene copolymer fraction (F1) and the second ethylene-propylene copolymer fraction (F2) [(F1)/(F2)] is in the range of 70/30 to 50/50, and
- the total amount of the first ethylene-propylene copolymer fraction (F1) and the second ethylene-propylene copolymer fraction (F2) together, based on the ethylene-propylene copolymer, is at least 98 wt.-%, preferably the ethylene-propylene copolymer consists of the first propylene ethylene-copolymer fraction (F1) and the second ethylene-propylene copolymer fraction (F2).

12. Blown film according to claim 11, wherein the ethylene-propylene copolymer complies with the equation 1

$$\frac{C2\ (PPC)}{(C2\ (F1)\ x\ [(F1)/(PPC)])} > 3.00 \qquad (1)$$

wherein

"C2 (PPC)" is the ethylene content [mol-%], measured by $^{13}C$ NMR, of the ethylene-propylene copolymer;
"C (F1)" is the ethylene content [mol-%], measured by $^{13}C$ NMR, of the first ethylene-propylene copolymer fraction (F1);
"(F1)/(PPC)" is the amount of the first propylene ethylene-copolymer fraction (F1) in the ethylene-propylene copolymer divided by the amount of the ethylene-propylene copolymer.

**13.** Blown film according to claim 11 or 12, wherein the ethylene content between the first ethylene-propylene copolymer fraction (F1) and the second ethylene-propylene copolymer fraction (F2) differs in the range of 2.0 to 6.0 mol-%.

**14.** Blown film according to any one of the preceding claims, wherein the blown film is air cooled.

**15.** Use of the polypropylene composition as defined in any one of the preceding claims 1 to 13 for the manufacture of a blown film.

Europäisches Patentamt
European Patent Office
Office européen des brevets

# EUROPEAN SEARCH REPORT

Application Number
EP 22 16 6275

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 960 797 A1 (BOREALIS AG [AT]) 2 March 2022 (2022-03-02) * paragraphs [0001], [0018] - [0063]; claims 1-4,11,12,13,15; examples * ----- | 1-15 | INV. C08J5/18 C08L23/14 |
| Y | US 2005/070644 A1 (TIKUISIS TONY [CA] ET AL) 31 March 2005 (2005-03-31) * paragraphs [0001], [0713], [0014], [0016], [0019], [0020], [0023], [0075]; claim 1 * ----- | 1-15 | |

TECHNICAL FIELDS SEARCHED (IPC)

C08J
C08L

The present search report has been drawn up for all claims

1

| Place of search | Date of completion of the search | Examiner |
|---|---|---|
| Munich | 14 September 2022 | Pamies Olle, Silvia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 22 16 6275

This annex lists the patent family members relating to the patent documents cited in the above-mentioned European search report. The members are as contained in the European Patent Office EDP file on
The European Patent Office is in no way liable for these particulars which are merely given for the purpose of information.

14-09-2022

| Patent document cited in search report | Publication date | Patent family member(s) | Publication date |
|---|---|---|---|
| EP 3960797 A1 | 02-03-2022 | EP 3960797 A1 | 02-03-2022 |
| | | WO 2022043385 A1 | 03-03-2022 |
| US 2005070644 A1 | 31-03-2005 | CA 2442789 A1 | 26-03-2005 |
| | | US 2005070644 A1 | 31-03-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019179959 A
- WO 9414856 A
- WO 9512622 A
- WO 2006097497 A
- WO 03051934 A
- EP 0887379 A
- WO 9212182 A
- WO 2004000899 A
- WO 2004111095 A
- WO 9924478 A
- WO 9924479 A
- WO 0068315 A
- WO 2015082379 A
- WO 2015011134 A
- US 4582816 A
- US 3405109 A
- US 3324093 A
- EP 479186 A
- US 5391654 A
- EP 887379 A
- EP 887380 A
- EP 887381 A
- EP 991684 A


### Non-patent literature cited in the description


- **NELLO PASQUINI.** Polypropylene Handbook. 412-414
- *CHEMICAL ABSTRACTS,* 25322-68-3
- **HANS ZWEIFEL.** Plastics Additives Handbook. 967-990
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromolecules,* 1997, vol. 30, 6251
- **ZHOU, Z. ; KUEMMERLE, R. ; QIU, X. ; REDWINE, D. ; CONG, R. ; TAHA, A. ; BAUGH, D ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 11289
- **RESCONI, L. ; CAVALLO, L. ; FAIT, A. ; PIEMONTESI, F.** *Chem. Rev.,* 2000, vol. 100, 1253
- **WANG, W-J. ; ZHU, S.** *Macromolecules,* 2000, vol. 33, 1157
- **CHENG, H. N.** *Macromolecules,* 1984, vol. 17, 1950
- *CHEMICAL ABSTRACTS,* 6683-19-8
- *CHEMICAL ABSTRACTS,* 31570-04-4
- *CHEMICAL ABSTRACTS,* 11097-59-9
- *CHEMICAL ABSTRACTS,* 85209-93-4